# EUROPEAN PATENT SPECIFICATION

(11) **EP 0 845 247 B1**
(45) Date of publication and mention of the grant of the patent: **26.02.2003**
(21) Application number: 97830631.4
(22) Date of filing: 28.11.1997
(51) Int. Cl.: A61C 1/00

(54) **Activation and monitoring system of a dental unit**
Aktivierungs- und Überwachungssystem einer Dentaleinheit
Système d'activation et de surveillance d'une unité dentaire

(30) Priority: 29.11.1996 IT BO960616
(43) Date of publication of application: 03.06.1998
(73) Proprietor: CASTELLINI S.p.A., I-40013 Castel Maggiore (Bologna) (IT)
(72) Inventor: Castellini, Franco, 40124 Bologna (IT)
(74) Representative: Lanzoni, Luciano

(56) References cited:
- EP-A- 0 597 467
- EP-A- 0 734 689
- US-A- 5 371 332

## Description

The present invention relates to an activation and monitoring system for a dental unit.

Currently, in the technical field pertaining to the construction of dental units, particular care and attention is dedicated to the study of specific electronic and computer systems allowing the activation and control, continuous and in real time, of all the functions present on the same unit in the course of dental care sessions.

These functions, in the form of specific data for each type of operating handpiece or accessory tool, are grouped together and stored thanks to the systems using microprocessors connected both to displays allowing the data to be read, and to sensor sets allowing to highlight parts being used or standing by.

A solution of this kind (by the same Applicant, see patent IT-AB-B0950132) comprises a console equipped with a microprocessor and integrated in a tablet or handpiece holder of the dental unit.

The console is provided with a display wherein there is a first portion defining viewing fields, in a fixed number, of operating function data of the dental unit, or scroll-through view fields showing accessory function data along a line of the display itself. To these accessory function data is combined a corresponding series of first push-buttons for the variation - activation of the operating function data or of the passing fields, located outside the display, correlated to the fixed viewing fields, and activating the function corresponding to the viewing field displayed each time.

There is also a series of second push-buttons for the variation - activation of a second portion comprising the remainder of the display and defining a part of the viewing fields of accessory function data which may also not depend on the type of screen used each time.

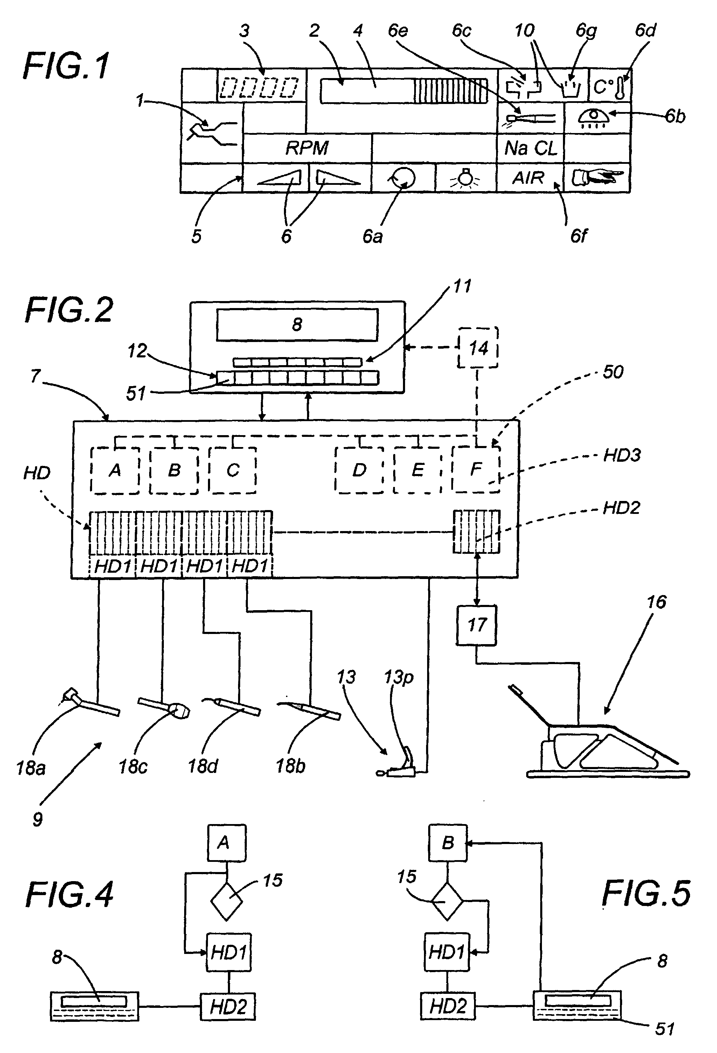

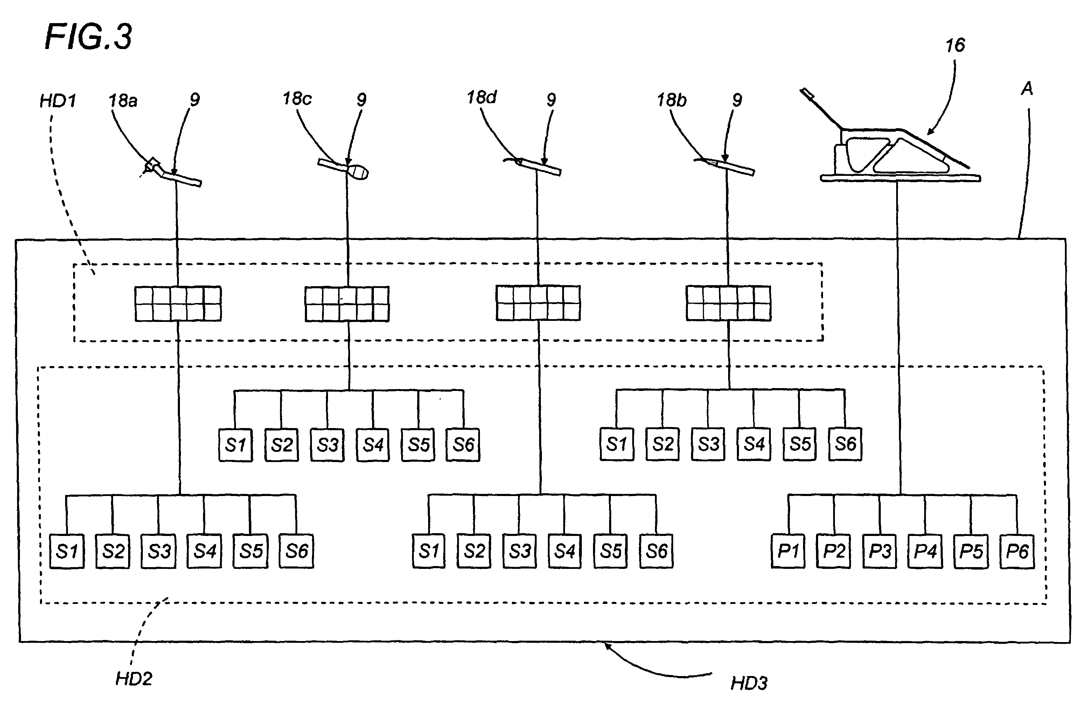

In other words, as can also be seen in Figure 1, if the physician draws a handpiece from the holder, the microprocessor recognises the type of handpiece which has been drawn (thanks to sensors suitably placed on the holder), and on the display a screen pertaining to that handpiece appears: for instance if the handpiece is a turbine 1, that screen will display, on the first portion 2, operating data regarding number of rpm 3, power output 4, etc., whilst in a portion of the fields of the underlying string 5 are displayed the scales of increase or decrease 6 or of activation of the rotation 6a, by means of the aforesaid corresponding first push-buttons, of the operating data of the handpiece. On the remaining fields of the display and in the remaining fields of the aforesaid string 5 are instead shown accessory and general data of the dental unit, such as operation of lamp 6b, activation of water to the cup and spittoon 6c, water temperature 6d, liquids and air supply to the handpiece 6e, 6f, etc.

The latter selection and setting performed by the physician on the individual handpiece remains stored in the microprocessor memory after the handpiece itself is placed back in the handpiece holder and even when the dental unit is totally shut off. Thanks to this solution, the handpiece picked up again in the course of the same session or after an interval of time remains set in the last configuration selected by the physician, thus allowing the latter to find the tool in the same operating configuration used up to that time.

In order further to broaden and optimise the operating and treatment options available to the physician, the microprocessor stores a series of memory banks, or operating modes in parallel for each of these handpiece, in order quickly to move from one mode to another one, better suited to the treatment to be performed at that moment.

Such an activation and monitoring system of a dental unit is known from document EP-A-0 734 689.

The Applicant, while experimenting the overall solution described above which led to a production phase, has enhanced the control system of the dental unit adding some functions which are more capable of meeting the physician's actual requirements: this also conceiving the use of the dental unit by several physicians within the same dental care organisation and completing the system itself with controls allowing a quick and practical alignment of the dental unit to the most immediate needs of the physician without his or her having to waste time performing time consuming and laborious setting operations.

The technical characteristics of the invention, according to the aforesaid purposes, can clearly be seen from the content of the claims reported below and its advantages shall be made more evident in the description that follows, made with reference to the enclosed drawings, which show an embodiment provided purely by way of non limiting example, in which:
- Figure 1 shows an operating display of the activation and monitoring system enclosed in the Italian patent IT-AB-B0950132;
- Figure 2 shows a first general diagram of the operational and management functions of the system of activation and monitoring constituting the object of the present invention on a dental unit;
- Figure 3 shows an additional, more detailed diagram of a series of levels of possible settings which can be performed with the subject enhanced system;
- Figures 4 and 5 show two flow charts illustrating respective possible operating configurations of the subject enhanced operating system.

According to the figures of the attached drawings, and with particular reference to Figure 2, the subject enhancement pertains to an activation and monitoring system of a dental unit which is not shown in its entirety as it is well known in the prior art.

Part of this system moreover is not fully mentioned and it is only schematically shown in the parts not involved with the subject enhancement, since it is already comprised in an Italian patent application BO95A000132 by the same Applicant.

The subject system allows to provide the dental unit with a microprocessor unit 7 which monitors the dental unit itself and is connected to and acts upon a display 8 for displaying screens of operating function data related to major equipment items 9, and of accessory function data related to auxiliary equipment 10 (such as a cup and a spittoon shown in the display in Figure 1) which do not depend on the screen displayed each time.

These major equipment items, or dental tools, 9 are shown, purely by way of example, in Figures 2 and 3 with four handpieces which define a known micromotor 18a, a syringe 18b, a turbine 18c and a tartar removal tool 18d.

As can be seen in Figure 1, such data are placed within related viewing fields present in the display 8 and can be varied by means of first and second activation - variation means 11 and 12, shown schematically in Figure 2 with a series of push-buttons (preferably of the "no touch" type), which are connected to the microprocessor unit 7 in order to accomplish the aforesaid variation according to the type of operation to be performed.

The microprocessor unit 7, moreover, is connected with means 13 for the command and direct activation of the major equipment items selected and of the auxiliary equipment 9 and 10; means 13 which are shown in Figure 2 with a known pedal set 13p.

To the microprocessor unit 7 is associated a memory unit HD which can record a first sewing level HD1 for each handpiece 18 present; this first setting level HD1 comprises the last screen related to operating function data and accessory function data activated in correspondence with a last selection of the corresponding handpiece 18; in this way, when the physician draws the same handpiece 18 anew, the last screen selected is called up with the related data. In addition to this first setting level, the aforesaid memory unit HD can provide for the recording of a second setting level HD2, also for each handpiece 18, comprising a series of operating modes, indicated as S1, S2, S3, S4...Sn, related to different operating function data and accessories each "dedicated" to a particular treatment, similar and independent one from the other, which can be called up progressively and displayed by means of the aforesaid first activation - variation means 11.

As can be seen in Figure 2, the microprocessor unit 7 is provided with means 50 for recording a third setting level HD3, which comprises a plurality of user groups A, B...N independent from each other and each of which provides for a related first and second setting level HD1 and HD2 selected by an individual operator. This third level HD3 (shown more in detail in Figure 3 wherein only a third level HD3 is shown and indicated as A) can be activated by a related recognition means 14 acting on the microprocessor unit 7, which can comprise, for instance, a specific password that can be typed by means of the related keys positioned below the display 8, through which the third level HD3 of the related user A, B...N is entered, or else a magnetic recognition key. In other words, within the dental unit it is possible simultaneously to group multiple personalised settings of corresponding physicians who work thereon, each activating the related setting at the time he or she begins to work on the dental unit.

Figures 4 and 5 show, designated as 15, means for the forced alignment of the major equipment items 9 (i.e. of the handpieces 18), which can be activated through the related means 51, which in turn can comprise an appropriate push button of the aforesaid first activation - variation means 11.

These forced alignment means 15 allow to position, or align, the operating modes S1, S2, S3, S4...Sn of the second setting level HD2 of each handpiece 18 on the corresponding operating mode selected on the handpiece 18 chosen on each occasion by the operator.

In other words, if the physician decides to activate an operating mode related to a particular treatment (surgery, for instance) which may be mode S1 (see Figure 3) of the handpiece 18a selected by the physician, then the operating modes of the remaining handpieces 18 will automatically align themselves onto their corresponding mode S1: in this way, each handpiece 18 selected thereafter shall already be aligned on operating mode S1 with no need for the physician to intervene on the activation - variation means 11 (see also Figure 5).

Obviously if the same physician needs to perform a subsequent treatment, different from the previous one and thus with a different operating mode from the handpiece 18 selected at that moment, for instance S3, all the other handpieces 18 will automatically set themselves to the related mode S3. In practice the means 15, if activated, as can be seen in the diagram in Figure 5, by-pass the first setting HD1 and lock the operating modes of the handpieces 18 onto the selected one, whilst their deactivation (see Figure 4) maintains active the function of the first setting HD1 described above for each individual handpiece 18.

The activation or deactivation of the forced alignment means 15 can be stored in the third setting level HD3 of each user unit A, B,...N according to the habits or operating requirements of the physician using the dental unit at that moment.

In order further to complete the physician's personalisation of the operating configuration of the dental unit, which comprises a chair 16 adjustable in height and inclination and fitted with related means 17 for controlling the positions the chair itself can assume (only shown schematically here), the microprocessor unit 7 provides for the storage, by the memory HD, of a series of operating modes P1, P2, P3, P4...Pn related to different configurations of the chair 16 in the second setting level HD2. This storage of operating modes P1, P2, P3, P4...Pn of the chair 16 by the memory unit HD can be combined in the third setting HD3 of each user group A, B,...N: in this way also the operating mode P1, P2, P3, P4...Pn of the chair 16 can be constrained to the corresponding operating mode S1, S2, S3, S4...Sn initially selected by the physician on the handpiece 18, since the chair 16 too is subjected to the constraining action of the aforesaid forced alignment means 15.

By way of example Figures 2 and 3 show six memory blocks, in the memory unit HD, which can be recorded in the second setting level HD2, and six memory blocks recordable as the third setting level HD3.

With such an activation and monitoring system it is therefore possible to obtain a quicker and more complete utilisation of the dental unit by the physician, as well as to allow the programming and setting of the handpieces on multiple levels to let the physician avoid time consuming and laborious searches on the screeen.

Moreover, the capability of aligning the operating modes of the handpieces and of the chair to the operating mode selected on each occasion allows the physician to make a single initial selection knowing that the other handpieces will already be perfectly aligned to the first one.

The invention thus conceived can be subject to numerous modifications and variations, without thereby departing from the scope of the inventive concept.

## Claims

1. Activation and monitoring system of a dental unit comprising, among other elements:
a microprocessor unit (7) for monitoring said dental unit connected to and acting upon a display (8) for showing screens of operating data of selected dental tools (9) and operating data of auxiliary equipment (10) ; said selected dental tools operating data and auxiliary equipment operating data being within related viewing fields present in the same display;
variation-activation means (11, 12) connected to said microprocessor unit (7) to vary the selected dental tools operating data and the auxiliary equipment operating data on the display and to vary the functions of dental tools (9) corresponding to the viewing field displayed; to said microprocessor unit (7) being associated a memory unit (HD) able to record a first setting level (HD1), for at least each said dental tool (9), comprising the last screen of selected dental tools operating data and auxiliary equipment operating data activated in correspondence with a subsequent selection of the corresponding said tool (9) and such as to call up said data and display anew the related last screen in correspondence with a subsequent selection of the same tool (9); said memory unit (HD) also being able to record a second setting level (HD2), for at least each said dental tool (9), comprising a series of operating modes of the dental tools (S1, S2, S3, S4...Sn) defining screens of different selected dental tools operating data and auxiliary equipment operating data, similar and independent one from the other, which can be called up progressively and displayed through said activation-variation means (11);
**characterized in that** said microprocessor unit (7) is 5 provided with means (50) for recording a third setting level (HD1, HD2) selected by an individual operator; said third level (HD3) being able to be activated by an operator recognition means (14) acting on said microprocessor unit (7); and **in that** said microprocessor unit (7) comprises means (15) for automatically setting, onto the operating mode (S1, S2, S3, S4...Sn) selected on a tool (9) already activated for a particular treatment, each of the remaining dental tools (9).

2. Activation and monitoring system according to claim 1, **characterized in that** the activation or deactivation of the automatic setting means (15) can be stored in the third setting level (HD3) of each user unit (A, B...N).

3. Activation and monitoring system according to claim 1, **characterised in that** said recording means (50) are associated to said microprocessor unit (7) and are comprised in said memory unit (HD).

4. Activation and monitoring system according to claim 1, **characterized in that** said microprocessor unit (7) provides for the storage, by said memory (HD), of a saries of operating modes (P1, P2, P3, P4...Pn) related to different configurations of a chair (16) of the dental unit adjustable in height and inclination and equipped with related means (17) for controlling the positions which the chair itself can assume.

5. Activation and monitoring system according to claim 1, **characterized in that** said microprocessor unit (7) provides for the storage, by said memory (HD), of a series of operating modes (P1, P2, P3, P4...Pn) related to different configurations of a chair (16) of the dental unit adjustable in height and inclination and equipped with related means (17) for controlling the positions which the chair itself can assume; said memory (HD) also providing for the combination, in said third setting (HD3), of said selected configuration (P1, P2, P3, P4...Pn) of said chair (16) by said user to the corresponding said user group (A, B...N).

6. Activation and monitoring system according to claim 1, **characterized in that** said microprocessor unit (7) provides for the storage, by said memory (HD), of a series of operating modes (P1, P2, P3, P4...Pn) related to different configurations of a chair (16) of the dental unit adjustable in height and inclination and equipped with related means (17) for controlling the positions which the chair itself can assume; said memory (HD) also providing for the combination, in said third seating (HD3), of said selected configuration (P1, P2, P3, P4...Pn) of said chair (16) to the corresponding said user group (A, B...N); said automatic setting means (15) acting on said operating modes (S1, S2, S3, S4...Sn) of said dental tools (9) and on said operating modes (P1, P2, P3, P4...Pn) of said chair (16).

7. Activation and monitoring system according to claim 1, **characterised in that** in said memory (HD) a recording is provided of at least six independent and parallel memory blocks for said second setting level (HD2)

8. Activation and monitoring system according to claim 1, **characterised in that** in said memory (HD) a recording is provided of at least six independent and parallel memory blocks for said third setting level (HD3).

## Patentansprüche

1. Aktivierungs- und Überwachungssystem einer Dentaleinheit, enthaltend unter anderem:
- eine Mikroprozessoreinheit (7) zum Überwachen der genannten Dentaleinheit, angeschlossen an und wirkend auf ein Display (8) zum Anzeigen von Bildschirmdarstellungen der Betriebsdaten der gewählten zahnärztlichen Instrumente (9) sowie der Betriebsdaten von Hilfseinrichtungen (10); wobei die genannten Betriebsdaten der zahnärztlichen Instrumente und die Betriebsdaten der Hilfseinrichtungen in entsprechenden, auf demselben Display vorhandenen Sichtfeldern erscheinen;
- Aktivierungs-/Veränderungsmittel (11, 12), angeschlossen an die genannte Mikroprozessoreinheit (7), um die Betriebsdaten der gewählten zahnärztlichen Instrumente und die Betriebsdaten der Hilfseinrichtungen auf dem Display zu verändern und die Funktionen der den angezeigten Sichtfeldern entsprechenden zahnärztlichen Instrumente (9) zu verändern; wobei an die genannte Mikroprozessoreinheit (7) eine Speichereinheit (HD) angeschlossen ist, in der Lage, eine erste Einstellungsstufe (HD1) für wenigstens jedes der genannten zahnärztlichen Instrumente (9) aufzuzeichnen, enthaltend die letzte Bildschirmdarstellung der Betriebsdaten der gewählten zahnärztlichen Instrumente und der Betriebsdaten der Hilfseinrichtungen, die anlässlich der Wahl des entsprechenden genannten Instrumentes (9) aktiviert worden sind, so dass die genannten Daten abgerufen werden und bei einer anschliessenden Wahl desselben Instrumentes (9) erneut die betreffende letzte Bildschirmdarstellung angezeigt wird; wobei die genannte Speichereinheit (HD) ebenfalls in der Lage ist, eine zweite Einstellungsstufe (HD2) für wenigstens jedes genannte zahnärztliche Instrument (9) aufzuzeichnen, enthaltend eine Reihe von Betriebsweisen (S1, S2, S3, S4...Sn), welche die Bildschirmdarstellungen der verschiedenen gewählten Betriebsdaten der zahnärztlichen Instrumente und der Betriebsdaten der Hilfseinrichtungen gleichermassen und unabhängig voneinander festlegen, und welche nach und nach durch die genannten Aktivierungs-/Veränderungsmittel (11, 12) abgerufen und angezeigt werden können;
**dadurch gekennzeichnet, dass** die genannte Mikroprozessoreinheit (7) mit Mitteln (50) zum Aufzeichnen einer dritten Einstellungsstufe (HD3) versehen ist, die von einem einzelnen Bediener gewählt wird; wobei die genannte dritte Einstellungsstufe (HD3) durch einen Bediener mit Hilfe von Erkennungsmitteln (14) aktiviert werden kann, die auf die genannte Mikroprozessoreinheit (7) wirken; und dadurch, dass die genannte Mikroprozessoreinheit (7) Mittel (15) zum automatischen Einstellen an einem jeden der verbleibenden zahnärztlichen Instrumente (9) enthält, und zwar aufgrund der gewählten Betriebsweise (S1, S2, S3, S4...Sn) an einem Instrument (9), das bereits für eine bestimmte Behandlung aktiviert worden ist.

2. Aktivierungs- und Überwachungssystem nach Patentanspruch 1, **dadurch gekennzeichnet, dass** die Aktivierung oder Entaktivierung der automatischen Einstellmittel (15) in der genannten dritten Einstellungsstufe (HD3) einer jeden Benutzereinheit (A, B...N) gespeichert werden kann.

3. Aktivierungs- und Überwachungssystem nach Patentanspruch 1, **dadurch gekennzeichnet, dass** die genannten Mittel (50) zum Aufzeichnen der genannten Mikroprozessoreinheit (7) zugeordnet und in der genannten Speichereinheit (HD) enthalten sind.

4. Aktivierungs- und Überwachungssystem nach Patentanspruch 1, **dadurch gekennzeichnet, dass** die genannte Mikroprozessoreinheit (7) durch die genannte Speichereinheit (HD) das Speichern einer Reihe von Betriebsweisen (P1, P2, P3, P4...Pn) vorsieht, die sich auf die verschiedenen Konfigurationen eines Stuhls (16) der Dentaleinheit beziehen, welcher in der Höhe und in der Neigung einstellbar und mit entsprechenden Mitteln (17) zum Einstellen der Positionen versehen ist, welche der Stuhl selbst einnehmen kann.

5. Aktivierungs- und Überwachungssystem nach Patentanspruch 1, **dadurch gekennzeichnet, dass** die genannte Mikroprozessoreinheit (7) durch die genannte Speichereinheit (HD) das Speichern einer Reihe von Betriebsweisen (P1, P2, P3, P4...Pn) vorsieht, die sich auf die verschiedenen Konfigurationen eines Stuhls (16) der Dentaleinheit beziehen, welcher in der Höhe und in der Neigung einstellbar und mit entsprechenden Mitteln (17) zum Einstellen der Positionen versehen ist, welche der Stuhl selbst einnehmen kann; wobei die genannte Speichereinheit (HD) in der genannten dritten Einstellungsstufe (HD3) ebenfalls dafür sorgt, die durch den genannten Benutzer gewählte genannte Konfiguration (P1, P2, P3, P4...Pn) des genannten Stuhls (16) der entsprechenden genannten Benutzergruppe (A, B...N) zuzuordnen.

6. Aktivierungs- und Überwachungssystem nach Patentanspruch 1, **dadurch gekennzeichnet, dass** die genannte Mikroprozessoreinheit (7) durch die genannte Speichereinheit (HD) das Speichern einer Reihe von Betriebsweisen (P1, P2, P3, P4...Pn) vorsieht, die sich auf die verschiedenen Konfigurationen eines Stuhls (16) der Dentaleinheit beziehen, welcher in der Höhe und in der Neigung einstellbar und mit entsprechenden Mitteln (17) zum Einstellen der Positionen versehen ist, welche der Stuhl selbst einnehmen kann; wobei die genannte Speichereinheit (HD) in der genannten dritten Einstellungsstufe (HD3) ebenfalls dafür sorgt, die gewählte genannte Konfiguration (P1, P2, P3, P4...Pn) des genannten Stuhls (16) der entsprechenden genannten Benutzergruppe (A, B...N) zuzuordnen; und wobei die automatischen Einstellmittel (15) auf die genannten Betriebsweisen (S1, S2, S3, S4...Sn) der genannten zahnärztlichen Instrumente (9) und auf die genannten Betriebsweisen (P1, P2, P3, P4...Pn) des genannten Stuhls (16) wirken.

7. Aktivierungs- und Überwachungssystem nach Patentanspruch 1, **dadurch gekennzeichnet, dass** in der genannten Speichereinheit (HD) das Aufzeichnen von wenigstens sechs unabhängigen und parallelen Speicherblöcken für die genannte zweite Einstellungsstufe (HD2) vorgesehen ist.

8. Aktivierungs- und Überwachungssystem nach Patentanspruch 1, **dadurch gekennzeichnet, dass** in der genannten Speichereinheit (HD) das Aufzeichnen von wenigstens sechs unabhängigen und parallelen Speicherblöcken für die genannte dritte Einstellungsstufe (HD3) vorgesehen ist.

## Revendications

1. Système d'activation et de surveillance d'une unité dentaire comprenant entre autres :
une unité à microprocesseur (7) pour la surveillance de ladite unité dentaire connectée à et agissant sur un afficheur (8) pour montrer des écrans de données de fonctionnement d'outils dentaires (9) sélectionnés et de données de fonctionnement d'un équipement auxiliaire (10) ; lesdites données de fonctionnement des outils sélectionnés et données de fonctionnement de l'équipement auxiliaire étant présentes dans le même afficheur à l'intérieur de champs de visualisation correspondants ;
des moyens d'activation-variation (11, 12) reliés à ladite unité à microprocesseur (7) pour modifier les données de fonctionnement des outils dentaires sélectionnés et les données de fonctionnement de l'équipement auxiliaire sur l'afficheur et pour modifier les fonctions des outils dentaires (9) correspondant au champ de visualisation affiché ; ladite unité à microprocesseur (7) étant associée à une unité de mémoire (HD) destinée à enregistrer un premier niveau de réglage (HD1), pour au moins chacun desdits outils dentaires (9), comprenant le dernier écran relatif aux données de fonctionnement des outils dentaires sélectionnés et aux données de fonctionnement de l'équipement auxiliaire activé relativement à une sélection ultérieure dudit outil (9) correspondant et de façon à appeler lesdites données et à afficher à nouveau le dernier écran correspondant relativement à une sélection ultérieure du même outil (9) ; ladite unité de mémoire (HD) étant également destinée à enregistrer un deuxième niveau de réglage (HD2), pour au moins chacun desdits outils dentaires (9), comprenant plusieurs modes de fonctionnement des outils dentaires (S1, S2, S3, S4, ...Sn) définissant des écrans relatifs à différentes données de fonctionnement des outils dentaires sélectionnés et données de fonctionnement de l'équipement auxiliaire, similaires et indépendants les uns des autres, pouvant être appelés progressivement et affichés au moyen desdits moyens d'activation-variation (11) ;
**caractérisé en ce que** ladite unité à microprocesseur (7) est pourvue de moyens (50) d'enregistrement d'un troisième niveau de réglage (HD1, HD2) sélectionné par un opérateur ; ledit troisième niveau (HD3) pouvant être activé par un moyen de reconnaissance de l'opérateur (14) agissant sur ladite unité à microprocesseur (7) ; et **en ce que** ladite unité à microprocesseur (7) comprend des moyens (15) de réglage automatique, sur le mode de fonctionnement (S1, S2, S3, S4...Sn) sélectionné sur un outil (9) déjà activé pour un traitement particulier, de chacun des outils dentaires (9) restants.

2. Système d'activation et de surveillance selon la revendication 1, **caractérisé en ce que** l'activation ou la désactivation des moyens de réglage automatique (15) peut être mémorisée dans le troisième niveau de réglage (HD3) de chaque unité utilisateur (A, B...N).

3. Système d'activation et de surveillance selon la revendication 1, **caractérisé en ce que** lesdits moyens d'enregistrement (50) sont associés à ladite unité à microprocesseur (7) et sont compris dans ladite unité de mémoire (HD).

4. Système d'activation et de surveillance selon la revendication 1, **caractérisé en ce que** ladite unité à microprocesseur (7) prévoit la mémorisation, par ladite mémoire (HD), de plusieurs modes de fonctionnement (P1, P2, P3, P4...Pn) liés à différentes configurations d'un fauteuil (16) de l'unité dentaire réglable en hauteur et en inclinaison et muni de moyens correspondants (17) de commande des positions que le fauteuil lui-même peut prendre.

5. Système d'activation et de surveillance selon la revendication 1, **caractérisé en ce que** ladite unité à microprocesseur (7) prévoit la mémorisation, par ladite mémoire (HD), de plusieurs modes de fonctionnement (P1, P2, P3, P4...Pn) liés à différentes configurations d'un fauteuil (16) de l'unité dentaire réglable en hauteur et en inclinaison et muni de moyens correspondants (17) de commande des positions que le fauteuil lui-même peut prendre ; ladite mémoire (HD) prévoyant également la combinaison, dans ledit troisième réglage (HD3), de ladite configuration sélectionnée (P1, P2, P3, P4...Pn) dudit fauteuil (16) par ledit utilisateur avec ledit groupe utilisateur correspondant (A, B...N).

6. Système d'activation et de surveillance selon la revendication 1, **caractérisé en ce que** ladite unité à microprocesseur (7) prévoit la mémorisation, par ladite mémoire (HD), de plusieurs modes de fonctionnement (P1, P2, P3, P4...Pn) liés à différentes configurations d'un fauteuil (16) de l'unité dentaire réglable en hauteur et en inclinaison et muni de moyens correspondants (17) de commande des positions que le fauteuil lui-même peut prendre ; ladite mémoire (HD) prévoyant également la combinaison, dans ledit troisième réglage (HD3), de ladite configuration sélectionnée (P1, P2, P3, P4...Pn) dudit fauteuil (16) avec ledit groupe utilisateur correspondant (A, B,...N) ; lesdits moyens de réglage automatique (15) agissant sur lesdits modes de fonctionnement (S1, S2, S3, S4, ...Sn) desdits outils dentaires (9) et sur lesdits modes de fonctionnement (P1, P2, P3, P4...Pn) dudit fauteuil (16).

7. Système d'activation et de surveillance selon la revendication 1, **caractérisé en ce que** dans ladite mémoire (HD), un enregistrement d'au moins six blocs de mémoire indépendants et parallèles pour ledit deuxième niveau de réglage (HD2) est prévu.

8. Système d'activation et de surveillance selon la revendication 1, **caractérisé en ce que** dans ladite mémoire (HD), un enregistrement d'au moins six blocs de mémoire indépendants et parallèles pour ledit troisième niveau de réglage (HD3) est prévu.
